# EUROPEAN PATENT APPLICATION

(11) **EP 4 195 660 A1**
(43) Date of publication of application: **14.06.2023**
(21) Application number: 21860304.1
(22) Date of filing: 23.08.2021
(51) Int. Cl.: H04N 7/14

(54) **VIDEO TELEPHONE CALLING METHOD, TERMINAL DEVICE, AND STORAGE MEDIUM**

(30) Priority: 31.08.2020 CN 202010898647
(71) Applicant: Huawei Technologies Co., Ltd., Shenzhen, Guangdong 518129 (CN)
(72) Inventor: CAO, Yangyang, Shenzhen, Guangdong 518129 (CN)
(74) Representative: Pfenning, Meinig & Partner mbB
(86) International application number: PCT/CN2021/114022
(87) International publication number: WO 2022/042469

(57) **Abstract**

This application provides a video call making method, a terminal device, and a computer-readable storage medium. The video call making method provided in this application includes: receiving a first operation, where the first operation is used to determine a called party on a voice call making interface displayed by the terminal device, and the called party can provide a video call service in one or more specific areas; determining, based on a location of the terminal device, that the location of the terminal device is in the one or more specific areas; and displaying a video call control on the voice call making interface when the location of the terminal device is in the one or more specific areas, where the video call control is configured to trigger video call communication with the called party. This application can simplify operation steps when a user makes a video call, and can avoid failure in making a video call.

## Description

This application claims priority to Chinese Patent Application No. 202010898647.6, filed with the China National Intellectual Property Administration on August 31, 2020 and entitled "VIDEO CALL MAKING METHOD, TERMINAL DEVICE, AND STORAGE MEDIUM", which is incorporated herein by reference in its entirety.

### TECHNICAL FIELD

This application relates to the field of video communication, and in particular, to a video call making method, a terminal device, and a computer-readable storage medium.

### BACKGROUND

With development of communication technologies, people can call the police emergency number 110 in a video call manner. The police video call not only provides the police with access to a real-time image of a caller, but also acts as a compensation for a conventional police voice call manner to meet police calling requirements of special groups (such as deaf-mute people).

In the conventional technology, a user makes a police video call for emergency by using a police video call APP installed on a mobile phone. To make the police video call, the user needs to open the police video call APP first, and then tap a police video call button. This operation process is complicated. In addition, once in an area that does not support a police video call service, the user cannot connect to the police when making the police video call for emergency. As a result, the user fails to call the police.

### SUMMARY

Some implementations of this application provide a video call making method, a terminal device, and a computer-readable storage medium. The following describes this application from a plurality of aspects. For implementations and beneficial effects of the following plurality of aspects, refer to each other.

According to a first aspect, an implementation of this application provides a video call making method, applied to a terminal device. The method includes: receiving a first operation, and determining a called party on a voice call making interface displayed by the terminal device, where the called party can provide a video call service in one or more specific areas; determining, based on a location of the terminal device, that the location of the terminal device is in the one or more specific areas; and displaying a video call control on the voice call making interface when the location of the terminal device is in the one or more specific areas, where the video call control is configured to trigger video call communication with the called party.

According to this implementation of this application, an entry for making a video call is a conventional voice call making interface. When making the video call, a user does not need to start a dedicated video call APP, so that operation steps can be simplified. In addition, in the method provided in this application, the terminal device displays the video call control only when it is determined that the current location of the terminal device is in an area that supports a video call service; otherwise, the terminal device does not display the video call control. Therefore, when the user requests to make the video call with the called party by using the video call control, it can be ensured that the current location of the terminal device is in an area that supports the video call service, to avoid a case in which a video call fails to be made.

In some implementations, the determining, based on a location of the terminal device, that the location of the terminal device is in the one or more specific areas includes: sending a query request that carries the location of the terminal device, where the query request is used to query a server associated with the called party whether the location is in the specific area; and receiving a reply in response to the query request, and determining that the location of the terminal device is in the specific area.

According to this implementation of this application, the terminal device sends the query request to the server, to determine whether the terminal device is located in an area that supports the video call service.

In some implementations, the server stores an area code of each of the one or more specific areas, and the server determines content of the reply by comparing an area code corresponding to the location of the terminal device with the area code of each of the one or more specific areas.

According to this implementation of this application, a list of areas that support the video call service is implemented as an area code list in a digital form, so that a computer can easily search for an area that supports police video call.

In some implementations, the voice call making interface is a dialing interface used to enter a number, and the determining a called party on a voice call making interface displayed by the terminal device includes: entering a number of the called party on the dialing interface.

In some implementations, the voice call making interface is an interface used to provide one or more contact entries, and the determining a called party on a voice call making interface displayed by the terminal device includes: determining, from the one or more contact entries provided by the voice call making interface, an entry used to indicate the called party.

In some implementations, the voice call making interface is enabled in any one of the following manners: tapping a setting control on a display interface of the terminal device; pressing a physical button on the terminal device in a predetermined manner; sending, to the terminal device, a voice instruction used to enable the voice call making interface; and shaking the terminal device.

According to this implementation of this application, the user may enable the voice call making interface in a plurality of manners, to further simplify operation steps, and make a video call to the called party in an emergency.

In some implementations, the first operation is an operation directly performed by the user on the terminal device, or is an operation indirectly performed by the user on the terminal device by operating an electronic device communicatively connected to the terminal device.

In some implementations, the called party provides a police calling service, and the video call communication is a police video call service.

According to a second aspect, an implementation of this application provides a terminal device, including: a memory, configured to store instructions executed by one or more processors of the terminal device; and a processor, where when the processor executes the instructions in the memory, the terminal device is enabled to perform the video call making method provided in any implementation of the first aspect of this application. For beneficial effects that can be achieved in the second aspect, refer to the beneficial effects of any implementation of the first aspect of this application. Details are not described herein again.

According to a third aspect, an implementation of this application provides a computer-readable storage medium, where the computer-readable storage medium stores instructions, and when the instructions are executed on a computer, the computer is enabled to perform the video call making method provided in any implementation of the first aspect of this application. For beneficial effects that can be achieved in the third aspect, refer to the beneficial effects of any implementation of the first aspect of this application. Details are not described herein again.

### BRIEF DESCRIPTION OF DRAWINGS

FIG. 1 is a diagram of an application scenario of a video call making method according to this application;
FIG. 2 is a schematic diagram of an interface of a video call APP in the conventional technology;
FIG. 3 is a schematic diagram of a structure of a mobile phone according to an embodiment of this application;
FIG. 4 is a diagram of a software architecture of a mobile phone according to an embodiment of this application;
FIG. 5 is a schematic diagram of a structure of a video call making system according to an embodiment of this application;
FIG. 6 is a schematic diagram of administrative divisions of a region according to an embodiment of this application;
FIG. 7 is a schematic flowchart of a video call making method according to an embodiment of this application;
FIG. 8(a) to FIG. 8(c) is an example 1 of a voice call making interface according to an embodiment of this application;
FIG. 9(a) to FIG. 9(c) is an example 2 of a voice call making interface according to an embodiment of this application;
FIG. 10 is an example 3 of a voice call making interface according to an embodiment of this application;
FIG. 11 is a schematic diagram of a video connection establishment process according to an embodiment of this application;
FIG. 12(a) to FIG. 12(c) is a schematic diagram of a video call connection interface according to an embodiment of this application;
FIG. 13 is a block diagram of an electronic device according to an implementation of this application; and
FIG. 14 is a schematic diagram of a structure of a system on chip (SoC, System on Chip) according to an implementation of this application.

### DESCRIPTION OF EMBODIMENTS

The following describes specific implementations of this application in detail with reference to accompanying drawings.

With development of communication technologies, current communication networks support real-time audio and video calls, so that face-to-face video calls (for example, video calls through video applications such as WeChat^{™} and Huawei MeeTime^{™}) can be made between geographically separated users by using terminal devices, to break through a limitation that only voice calls (for example, voice calls through telephone networks provided by carriers such as China Mobile^{™} and China Unicom^{™}) can be made before, and bring convenience to people's life.

An important application of a video call is to request a public or private service through the video call. For example, a user requests a public service such as a bank, social insurance, and medical rescue through a video call, or requests a private service such as commercial insurance, home cleaning, and remote education through a video call. When the user requests a service through the video call, a service provider can intuitively observe a real-time image of the user, to provide a proper service mode.

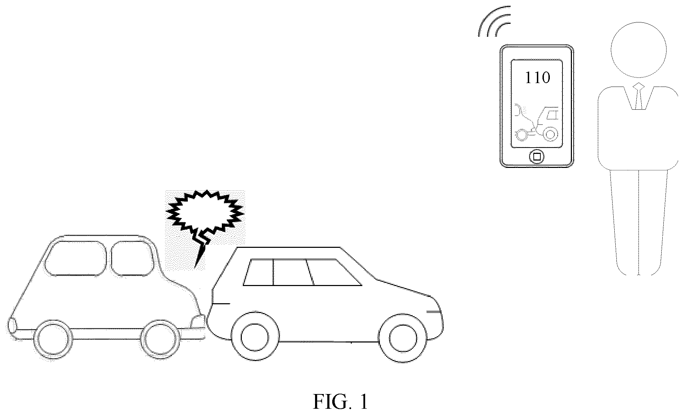

FIG. 1 shows a scenario in which a police calling service is requested through a video call. In FIG. 1, a vehicle of a user is rear-ended by a trailing vehicle. When reporting to the police, the user may transmit an image of an accident scene to a police video call agent in real time through a video call. In this way, the police can intuitively understand a situation at the scene (for example, whether there are injuries, and whether traffic jams are caused), to adopt an appropriate dispatching method (for example, whether emergency dispatching is required) according to the on-site situation.

In addition, a police video call manner can facilitate police calling of special groups (for example, deaf-mute people), and act as a compensation for a police voice call manner to meet police calling requirements of special groups.

In the conventional technology, when a user requests a public or private service through a video call, the user may send a video call request to a service party by using a video call APP installed on a user terminal, and this operation process is complicated. In addition, the service party may support the video call service only in some areas. When the user makes the video call to the service party in an area that does not support the video call service, the video call cannot be connected.

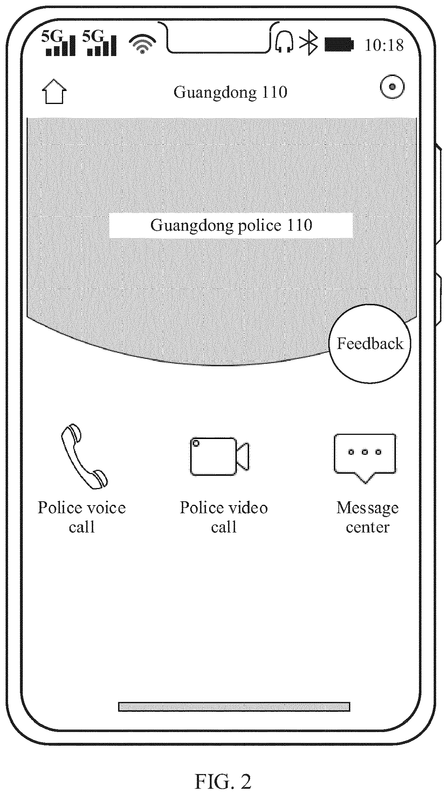

Police video call is used as an example. FIG. 2 shows a manner of making a police video call in the conventional technology. Specifically, a police video call APP is installed on a user terminal (for example, a mobile phone). When calling the police, a user opens the police video call APP, taps a police video call button, and waits for a police video call agent to answer the call. After the police answer, the user may have a video call with a call taker.

In the conventional technology, the user needs to perform a plurality of steps of operations during the police video call, for example, unlocking a mobile phone, opening the police video call APP, and the like. An operation path is long, and an operation process is complex. In addition, the police may have enabled the police video call service in some areas (usually administrative areas), but not in other areas. In this case, when the user makes the police video call in an area in which the police video call service is not enabled, the user cannot reach the police, and a police calling failure occurs.

To resolve the foregoing problem in the conventional technology, an implementation of this application provides a video call making method. Specifically, when a user needs to make a video call by using a terminal device (for example, a mobile phone), a called party is determined on a conventional voice call making interface (for example, a number of the called party is entered). Then, the terminal device determines whether a current location of the terminal device is in an area that supports a video call service. If the terminal device determines that the current location of the terminal device is in an area that supports the video call service, the terminal device displays a video call control on the voice call making interface. The video call control is configured to trigger video call communication with the called party. If the terminal device determines that the current location of the terminal device is located in an area that does not support the video call service, the terminal device does not display the video call control on the interface.

In other words, in the method provided in this application, an entry for making the video call is the conventional voice call making interface. When making the video call, the user does not need to start a dedicated video call APP, so that operation steps can be simplified. In addition, in the method provided in this application, the terminal device displays the video call control only when it is determined that the current location of the terminal device is in an area that supports the video call service. Otherwise, the terminal device does not display the video call control. Therefore, when the user requests to make the video call with the called party by using the video call control, it can be ensured that the current location of the terminal device is in an area that supports the video call service, to avoid a case in which a video call fails to be made.

A form of the user terminal device is not limited in this application. The terminal device may be a mobile device such as a mobile phone, a tablet, a notebook computer, or a wearable device, or may be a fixed device such as a smart screen or a desktop computer. The following uses a mobile phone as an example for description.

The following describes specific embodiments of this application by using an example of requesting a police video call service. However, it may be understood that this is not limited thereto in this application. This application may be further applied to another scenario in which a video call and a voice call need to be performed, for example, a public service such as a bank, social security, and medical rescue is requested through a video call, or a private service such as commercial insurance, home cleaning, and remote education is requested through a video call.

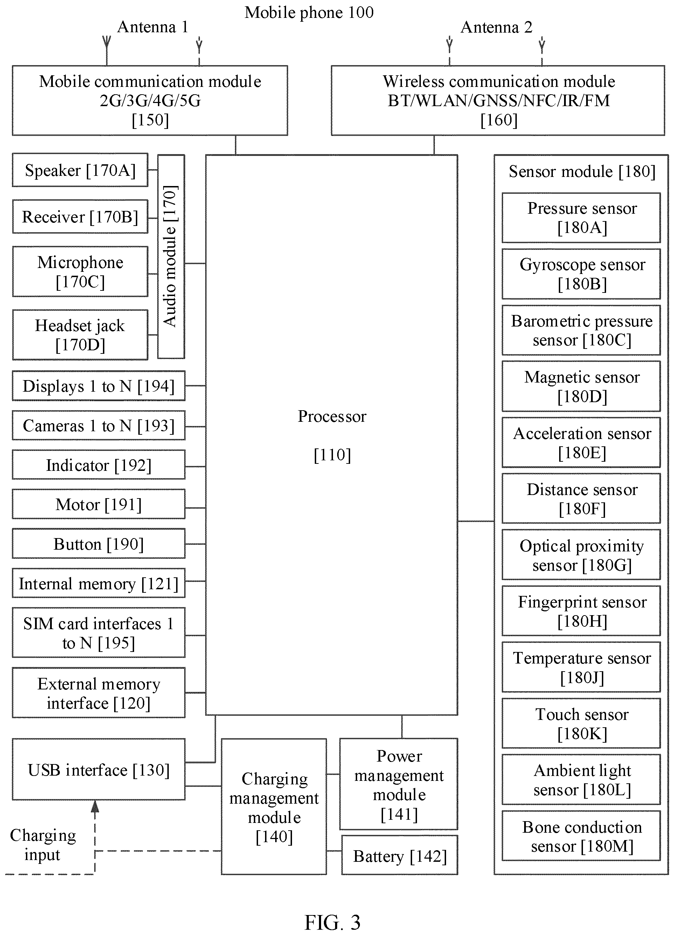

FIG. 3 is a schematic diagram of a structure of a mobile phone 100 according to an embodiment.

The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an illustrated structure in this embodiment of the present invention does not constitute a specific limitation on the mobile phone 100. In other embodiments of this application, the mobile phone 100 may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

It may be understood that an interface connection relationship between the modules shown in this embodiment of the present invention is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

A wireless communication function of the mobile phone 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applied to the mobile phone 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication applied to the mobile phone 100, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The mobile phone 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the mobile phone 100 may include one or N displays 194, where N is a positive integer greater than 1.

The mobile phone 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The digital signal processor is configured to process a digital signal, and may process another digital signal in addition to the digital image signal. For example, when the mobile phone 100 selects a frequency, the digital signal processor is configured to perform Fourier transform on frequency energy.

The video codec is configured to compress or decompress a digital video. The mobile phone 100 may support one or more video codecs. In this way, the mobile phone 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU can implement applications such as intelligent cognition of the mobile phone 100, such as image recognition, facial recognition, speech recognition, and text understanding.

The external memory interface 120 may be configured to connect to an external memory card, for example, a micro SD card, to extend a storage capability of the mobile phone 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) and the like created during use of the mobile phone 100. In addition, the internal memory 121 may include a high-speed random access memory, or may include a nonvolatile memory, for example, at least one magnetic disk storage device, a flash memory, or a universal flash storage (universal flash storage, UFS). The processor 110 performs various function applications of the mobile phone 100 and data processing by running the instructions stored in the internal memory 121 and/or instructions stored in the memory disposed in the processor. The instructions stored in the internal memory 121 may include instructions that enable the mobile phone 100 to perform the video call making method provided in this application when being executed by at least one of the processors.

A software system of the mobile phone 100 may use a layered architecture, an event-driven architecture, a microkernel architecture, a micro service architecture, or a cloud architecture. In this embodiment of the present invention, an Android system with the layered architecture is used as an example to describe a software structure of the mobile phone 100.

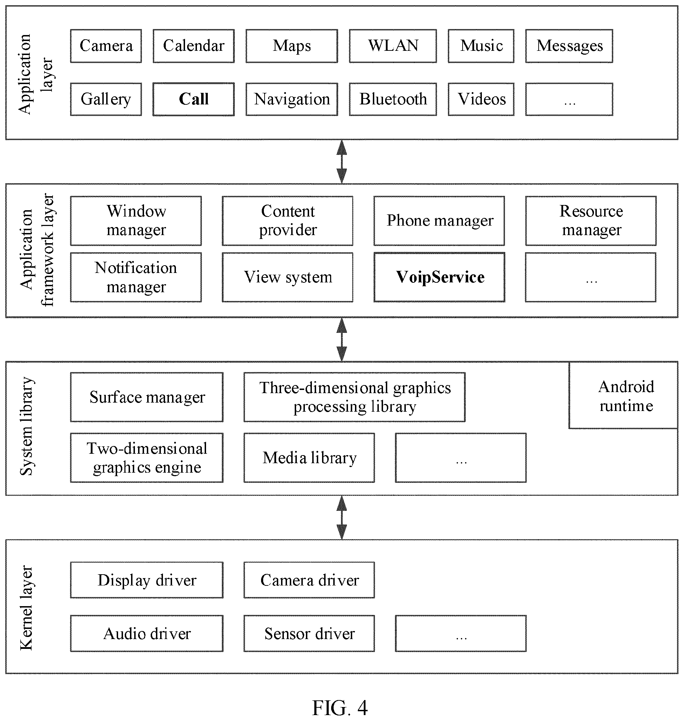

FIG. 4 is a block diagram of a software structure of a mobile phone 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Maps, Navigation, WLAN, Bluetooth, Music, Videos, and Messages. A "Phone" application is configured to provide an interface for a user to make a voice call/video call, for example, generate a voice call making interface and a video call control, and may be further configured to implement a video communication function by invoking an underlying service of the mobile phone 100 (for example, VoipService (VoipService) at the application framework layer).

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a performance function that needs to be invoked in java language, and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a video call making method provided in this embodiment of this application by using police video call as an example (that is, using an example in which a called party is the police). However, it may be understood that this application is not limited thereto.

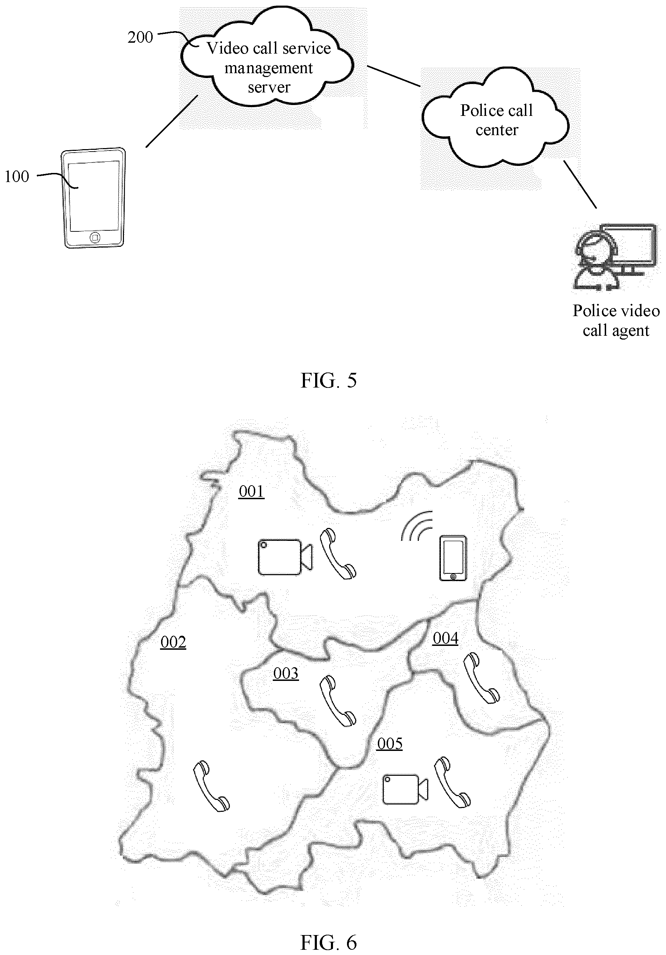

For ease of understanding, a system architecture of a police video call system provided in this embodiment is first described. As shown in FIG. 5, the police video call system includes a mobile phone 100, a video call service management server 200 (which is a server associated with a called party, for example, a Huawei^{™} cloud server, referred to as "video server 200"), a police call center (a police video call server), and a video call agent of the police (a police video call terminal, referred to as "police video call agent").

The video server 200 stores a list of areas that support a police video call service. In this embodiment, the area list is specifically an area code list of areas that support the police video call service. An area code is a string of digits that uniquely identify an area. By transforming the area list into a numeric area code list, a computer can easily find the area that supports police video call. However, this application is not limited thereto. For example, in some other embodiments, the area list may alternatively be an area name list.

FIG. 6 is a schematic diagram of administrative divisions of a region according to this embodiment. The region includes five administrative areas. To simplify description, in this embodiment, area codes of the five administrative areas are respectively represented by 001 to 005 (underlined numbers in FIG. 6). In FIG. 6, an area with a telephone identifier is an area that supports a police voice call service, and an area with a camera identifier is an area that supports a police video call service. Therefore, five administrative areas managed by the region all support the police voice call service (a user may dial 110 to call the police). The area 001 and the area 005 support the police video call service (that is, the area 001 and the area 005 are specific areas in which the video call service is provided by the police). In this embodiment, a number of areas that support the police video call service is 2. In another embodiment, a number of areas that support the police video call service may be another number, for example, 1.

In some embodiments, an area code of an administrative area is determined according to a coding rule formulated by the state, for example, an area code of an administrative area is determined according to the Codes for the Administrative Divisions of the People's Republic of China (GB/T2260) (an area code determined by this method corresponds to the first six digits of a Chinese resident identity card number). In some other embodiments, an area code of an administrative area may be determined according to a coding rule customized by each area or user (for example, a coding rule customized by the police).

In this embodiment, an area that supports police video call is divided based on an administrative area. However, this application is not limited thereto. In some other embodiments, an area that supports police video call may not be divided based on an administrative area, but may be divided based on an actual geographical location.

The police call center sends the list of areas (the list includes area codes 001 and 005 according to FIG. 6) that support the police video call service to the video server 200, and the video server 200 stores the received list of areas. When the area that supports the police video call service changes, (for example, when an administrative area that supports the police video call service is added), the police call center updates the list of areas that support the police video call service to the video server 200.

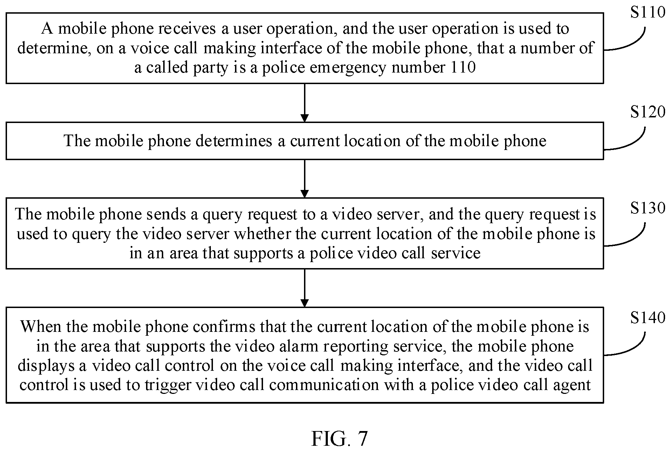

The following specifically describes the video call making method provided in this embodiment. As shown in FIG. 7, the method provided in this embodiment includes the following steps.

S110: A mobile phone 100 receives a user operation (which is used as an operation directly performed by a user on a terminal device), and the user operation is used to determine, on a voice call making interface of the mobile phone 100, that a called party is the police.

The user may determine, on the voice call making interface of the mobile phone 100, that a called number is the police emergency number 110 in a plurality of manners, for example, the user enables a voice call dialing interface of the mobile phone 100, and enters the police emergency number 110 on the voice phone dialing interface, or the user enables the voice call making interface that includes one or more contact entries, and the contact entries include an entry used to indicate that a contact is the police. The following provides several specific examples with reference to the accompanying drawings.

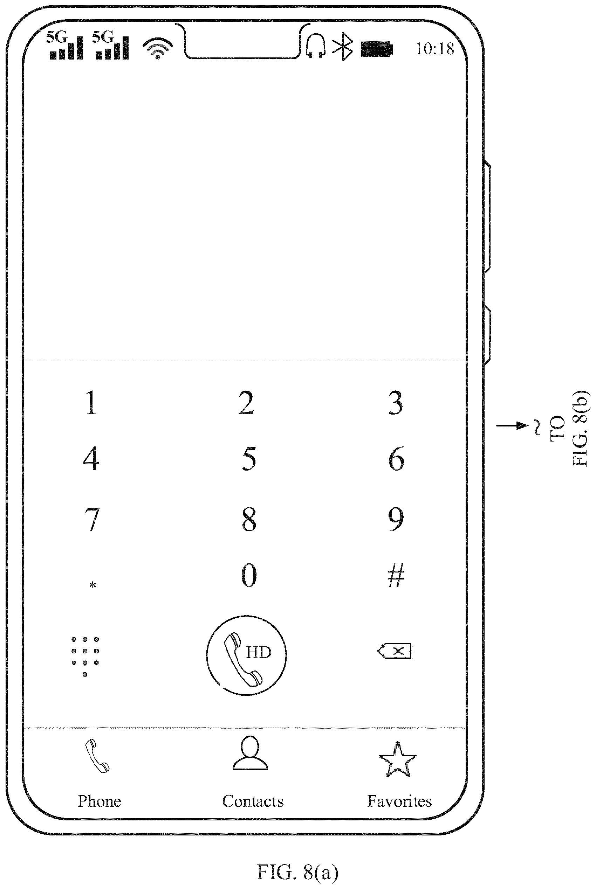

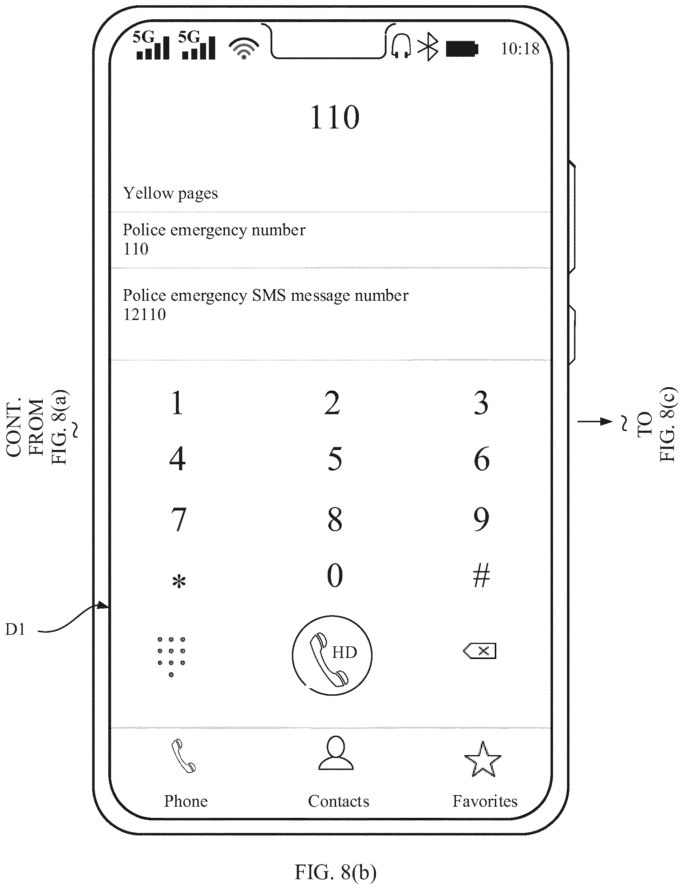

Example 1 (FIG. 8(a) to FIG. 8(c)): The user unlocks the mobile phone 100, and enables a voice call dialing interface D1 shown in FIG. 8(a) (as an example of the voice call making interface); and the user enters, on the dialing interface D1, a phone number 110 by using a virtual keyboard (as shown in FIG. 8(b)), so that the number of the called party is determined as the police emergency number 110.

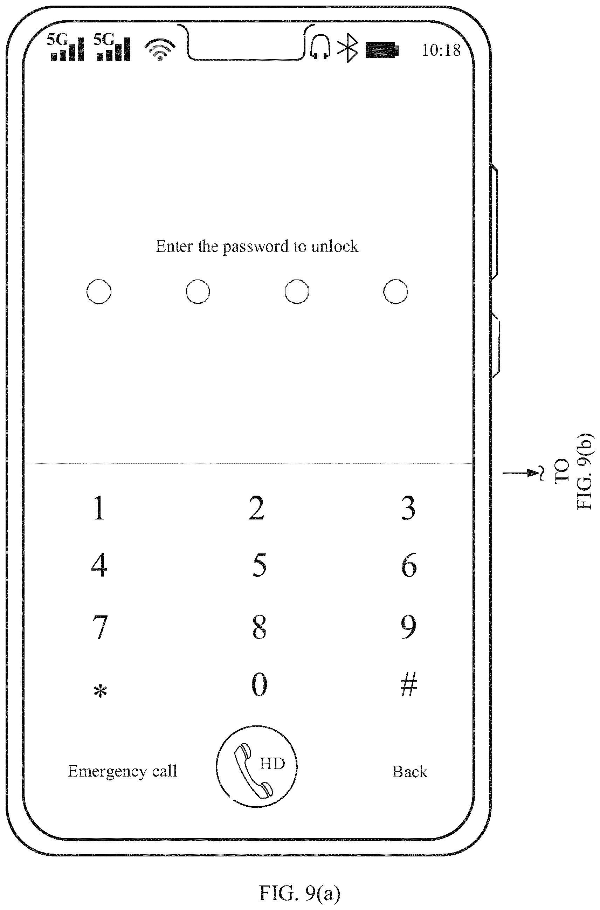

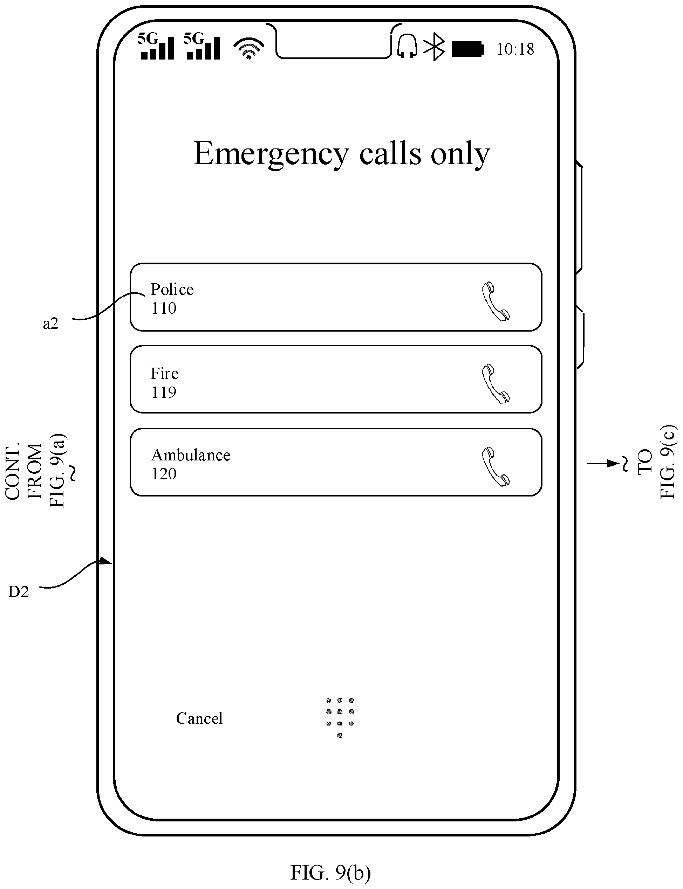

Example 2 (FIG. 9(a) to FIG. 9(c)): In a screen-locked state of the mobile phone 100, the user taps an emergency call button (for example, an emergency call button shown in FIG. 9(a)) on a lock screen of the mobile phone 100, to enter an emergency call interface D2 shown in FIG. 9(b) (as another example of the voice call making interface). The emergency call interface D2 includes three contact entries, and a contact entry a2 is used to indicate that the contact is the police 110. Therefore, the called party may be determined as the police by enabling the emergency call interface D2. In this example, the user starts a police calling interface without unlocking the screen of the mobile phone 100, to further simplify user operations, and meet a police calling requirement in an emergency.

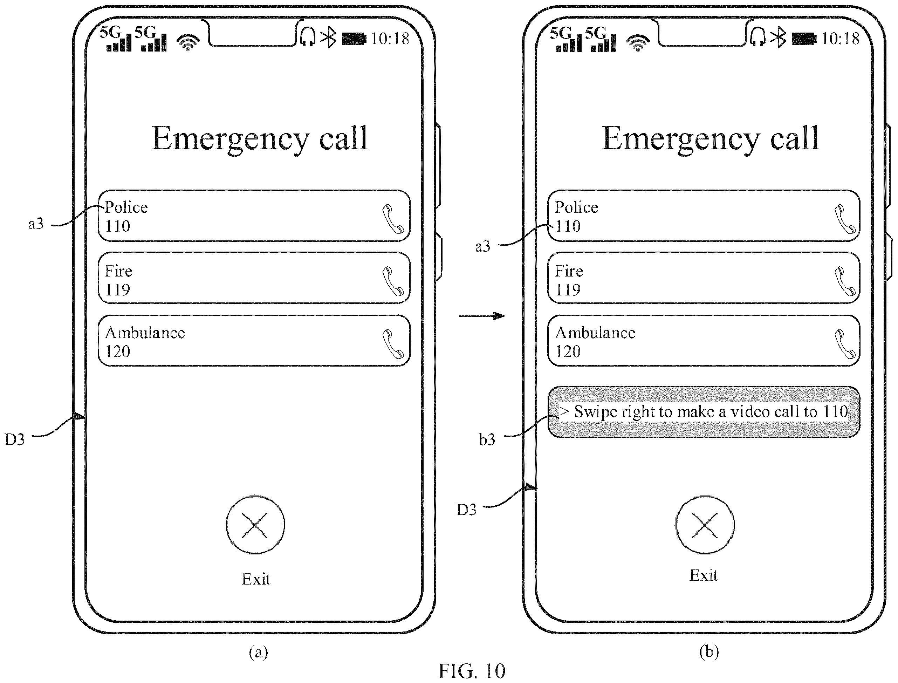

Example 3 (FIG. 10): The user continuously presses a power button of the mobile phone 100 for a predetermined quantity of times (for example, five times), to invoke an emergency call interface D3 shown in FIG. 10(a) (as still another example of the voice call making interface). The emergency call interface D3 includes three contact entries, and a contact entry a3 is used to indicate that the contact is the police 110. Therefore, the called party may be determined as the police by enabling the emergency call interface D3. In this example, the user enables a police calling interface by pressing the power button instead of operating the screen, to further simplify user operations.

For the foregoing examples 1 to 2, the user may enable the voice call making interface of the mobile phone 100 by tapping a setting control on the display interface of the mobile phone 100. Such a control may be provided in a screen-locked state or in a screen-active state. The control may be an application provided by the system, or may be provided by a dedicated APP.

For the emergency call shown in the example 3, in addition to enabling the emergency call interface D3 of the mobile phone 100 by pressing the power button of the mobile phone 100 for a predetermined quantity of times, the user may enable the emergency call interface D3 of the mobile phone 100 by pressing another physical button of the mobile phone 100 in a predetermined manner (for example, pressing a volume button for preset duration), by sending a voice instruction to the mobile phone 100, or by shaking the mobile phone 100. Details are not described herein again.

S120: The mobile phone 100 determines a current location of the mobile phone 100.

The mobile phone 100 first obtains location coordinates (usually longitude and latitude coordinates) of the location of the mobile phone 100 in a positioning manner such as GPS positioning and base station positioning. Then, the mobile phone 100 determines, based on the location coordinates of the location of the mobile phone 100, an administrative area corresponding to the location coordinates. For example, the administrative area corresponding to the location coordinates is determined by using a map application (for example, Baidu Maps^{™} or Google Maps^{™}) or a web map installed in the mobile phone 100. After determining the administrative area corresponding to the location coordinates, the mobile phone 100 further determines an area code of the location of the mobile phone 100. As shown in FIG. 6, in this embodiment, the area code corresponding to the location of the mobile phone 100 (or a region in which the mobile phone 100 is located) is 001.

S130: The mobile phone 100 sends a query request to a video server 200, and the query request is used to query the video server 200 whether the current location of the mobile phone 100 is in an area that supports a police video call service.

The query request sent by the mobile phone 100 to the video server 200 carries location information of the location of the mobile phone 100. In this embodiment, the location information is the area code 001 corresponding to the location of the mobile phone 100. After receiving the query request sent by the mobile phone 100, the video server 200 matches the area code 001 carried in the query request with an entry in the area code list stored in the video server 200. If the area code list of the video server 200 includes the area code 001, the video server 200 replies to the mobile phone 100 that the current location of the mobile phone 100 is in the area that supports the police video call service, to trigger the mobile phone 100 to perform step S 140. If the area code list of the video server 200 does not include the area code 001, the video server 200 replies to the mobile phone 100 that the current location of the mobile phone 100 is not in the area that supports the police video call service, so that the mobile phone 100 keeps displaying the current voice call making interface (for example, the voice call dialing interface D1 shown in FIG. 8(b) or the emergency call interface D2 shown in FIG. 9(b)), and waits for a further operation (for example, dialing a police voice call number) of the user.

In this embodiment, the location information sent by the mobile phone 100 to the video server 200 is the area code of the area in which the mobile phone 100 is located. This application is not limited thereto. In another embodiment, the location information sent by the mobile phone 100 to the video server 200 is location coordinates of the location in which the mobile phone 100 is located (for example, longitude and latitude coordinates obtained through GPS positioning). The video server 200 determines, based on the received location coordinates, the area code of the area in which the mobile phone 100 is located, and determines, based on the area code, whether the location of the mobile phone 100 is in an area that supports the police video call service.

S140: The mobile phone 100 displays a video call control on the voice call making interface, and the video call control is configured to trigger video call communication with a police video call agent.

A specific setting manner of the video call control is not limited in this embodiment. The following provides several specific setting manners of the video call control with reference to the foregoing example 1 to example 3.

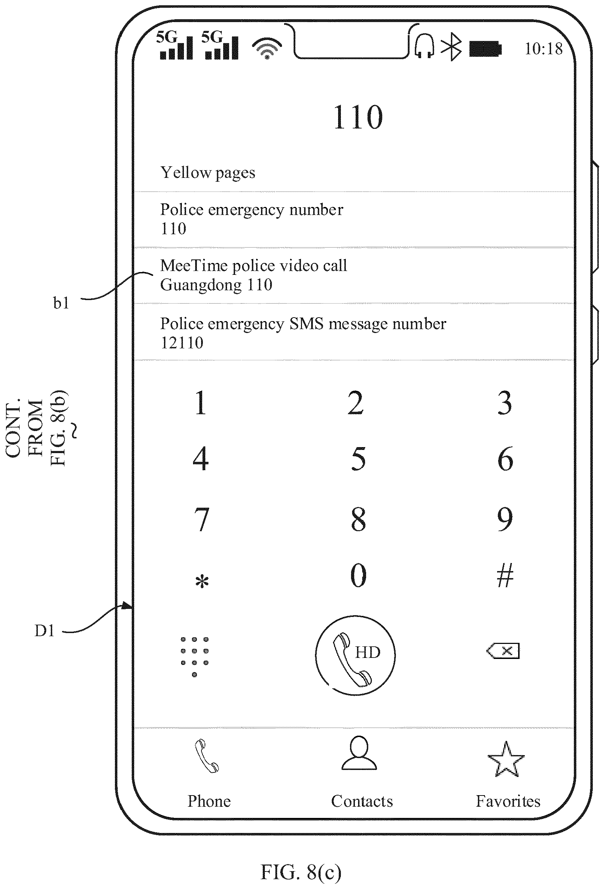

Example 1 FIG. 8(a) to FIG. 8(c)): After determining that the location of the mobile phone 100 is in the area that supports the police video call service, the mobile phone 100 generates a video call control b1 (as shown in FIG. 8(c)) on the voice call dialing interface D1, and the user taps the video call control b1 to trigger the video call communication with the police video call agent.

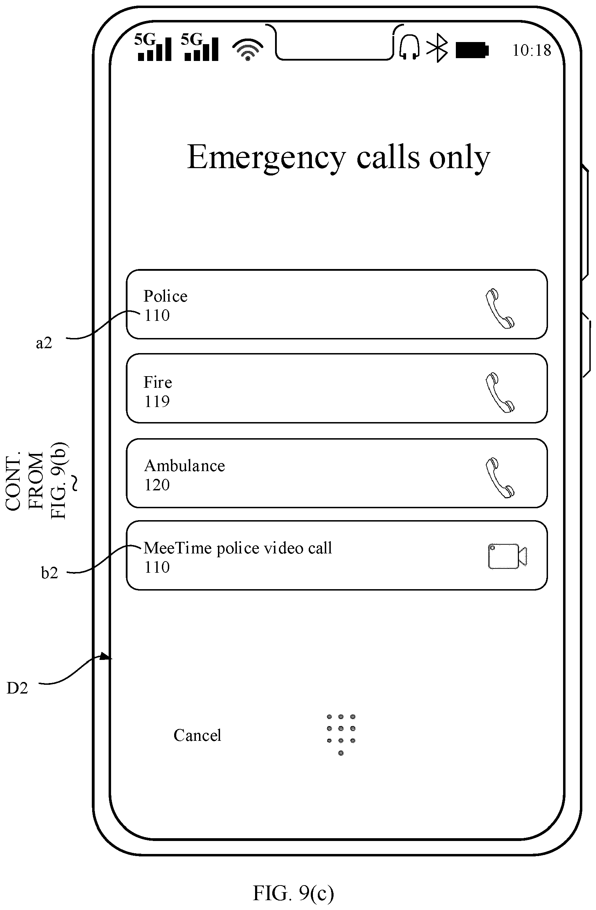

Example 2 (FIG. 9(a) to FIG. 9(c)): After determining that the location of the mobile phone 100 is in the area that supports the police video call service, the mobile phone 100 generates a video call control b2 (as shown in FIG. 9(c)) on the emergency call interface D2, and the user taps the video call control b2 to trigger the video call communication with the police video call agent.

Example 3 (FIG. 10): After determining that the location of the mobile phone 100 is in the area that supports the police video call service, the mobile phone 100 generates a video call control b3 (as shown in FIG. 10(b)) on the emergency call interface D3, and the user slides the video call control b3 to trigger the video call communication with the police video call agent.

The foregoing provides several setting manners of the video call control, but this is not limited in this application thereto. The video call control may also be set in another manner, for example, a control triggered by a pinch gesture.

In this embodiment, the video call making method is described by using police video call as an example. However, this application is not limited thereto. The method provided in this application may be further applied to requesting another public or private service through a video call, for example, the insurance and banking services mentioned above in this specification.

In addition, this embodiment is an example for describing the technical solutions of this application, and a person skilled in the art may make other variations.

For example, in some embodiments, the video call making method provided in this application may be further implemented by using a distributed system. For example, the user sends a police video call instruction to the mobile phone 100 on a device (for example, a hand band) that does not support a video call capability. In response to receiving the instruction, the mobile phone 100 performs the video call making method provided in this application (as an operation that the user acts indirectly on the terminal device). In this embodiment, the user may not directly operate the mobile phone 100, but indirectly operate the mobile phone 100 by operating the hand band, to implement police video call. For example, the foregoing step in which the user directly interacts with the mobile phone 100 (for example, the user enters the police emergency number 110 on the voice call dialing interface D 1) is replaced with the step in which the user interacts with the mobile phone 100 by using the band (for example, the user enters the police emergency number 110 on the band, and the band transmits input data to the mobile phone 100).

For another example, the video server 200 may send the area code list that is stored in the video server 200 and that supports the police video call service to the mobile phone 100. After receiving the area code list, the mobile phone 100 stores the area code list locally. In this way, the mobile phone 100 may determine, based on locally stored information of the mobile phone 100, whether the current location of the mobile phone 100 is in the area that supports the police video call service, and does not need to query the video server 200 whether the current location of the mobile phone 100 is in the area that supports the police video call service. Further, when the area code list in the video server 200 is updated, the video server 200 sends the updated area code list to the mobile phone 100 in real time, so that the mobile phone 100 updates the locally stored area code list in time.

According to the video call making method provided in this embodiment, when a user terminal device (corresponding to the mobile phone 100 in this embodiment) determines that a location of the user terminal device is in an area that supports a video call service (corresponding to the police video call service in this embodiment), a video call control is dynamically generated. Therefore, after triggering the video call control, the user can successfully establish a video call connection with a called party, to avoid a case in which a video call fails. In addition, in this embodiment, the video call control (that is, a video call entrance) is located on the conventional voice call making interface, and the user may initiate a video call on the conventional voice call making interface, to simplify an operation process and improve user experience.

After the video call control is triggered, the mobile phone 100 starts to establish a video communication connection with the police video call agent. A method for establishing a video connection between the mobile phone 100 and the police video call agent is not limited in this embodiment. For example, the mobile phone 100 and the police video call agent establish a video connection based on Huawei MeeTime^{™} technology.

The following briefly describes a process of establishing a video connection between the mobile phone 100 and the police video call agent provided in this embodiment, but this is not limited in this application thereto.

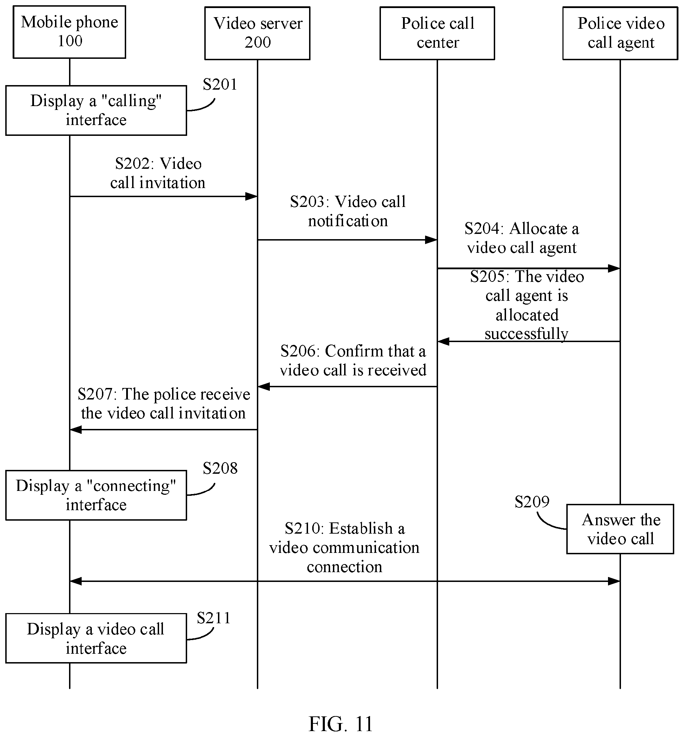

As shown in FIG. 11, a process of establishing a video connection includes the following steps.

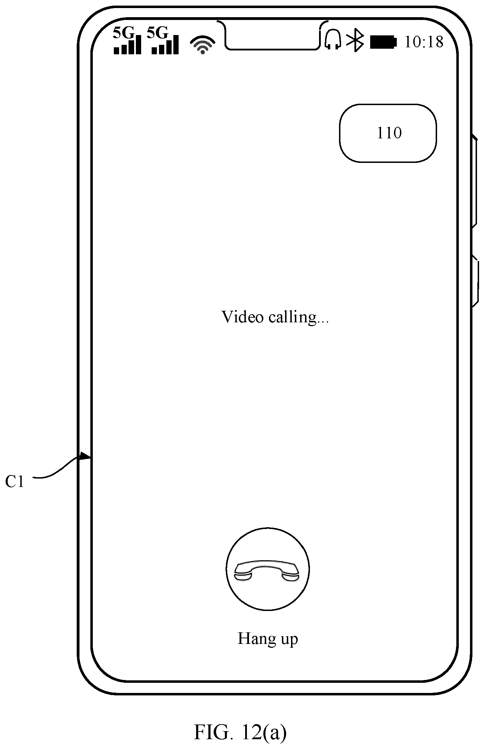

S201: In response to the triggering of the video call control (for example, the mobile phone 100 receives a tap operation on the video call control b2 in FIG. 9(c)), the mobile phone 100 updates the voice call making interface to a video call "calling" interface C1 (refer to FIG. 12(a)), to prompt the user that the mobile phone 100 is sending a video call connection request.

S202: The mobile phone 100 sends a video call invitation to the video server 200, and the video call request carries mobile phone user information (for example, a number of the mobile phone 100, user account number, and the like) and communication address information (for example, an IP address of the mobile phone 100) of the mobile phone 100.

S203: The video server 200 sends a video call notification to a police call center, where the video call notification carries the mobile phone user information and the mobile phone communication address information that are received from the mobile phone 100.

S204: The police call center allocates, based on idle states of video call agents, an agent to answer a video call, and notifies the allocated video call agent of the mobile phone user information and the mobile phone communication address information.

S205: The video call agent confirms that the video call can be answered, and feeds back a message indicating successful allocation of the video call agent to the police call center.

S206: The police call center sends, to the video server 200, a notification that the video call is received, and the notification carries communication address information (for example, an IP address of the police video call agent) of the police video call agent.

S207: The video server 200 sends, to the mobile phone 100, a notification that the police receive the video call invitation, and the notification carries the communication address information of the police video call agent.

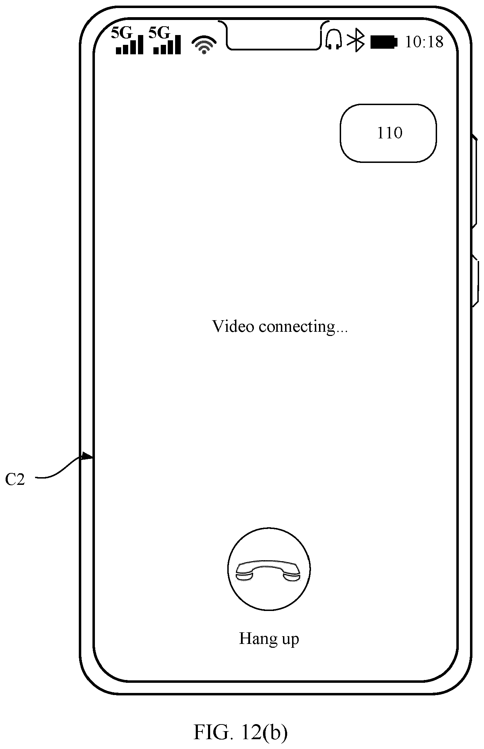

S208: In response to determining that the police receive the video call invitation, the mobile phone 100 updates the video call "calling" interface to a video call "connecting" interface C2 (refer to FIG. 12(b)), and prompts the user that a video call connection is being established.

S209: The police video call agent answers the video call from the mobile phone 100.

S210: The mobile phone 100 establishes the video call connection to the police video agent, for example, the mobile phone 100 establishes the video call connection to the police video call agent based on a real-time communication (Real-time Communication, RTC) technology.

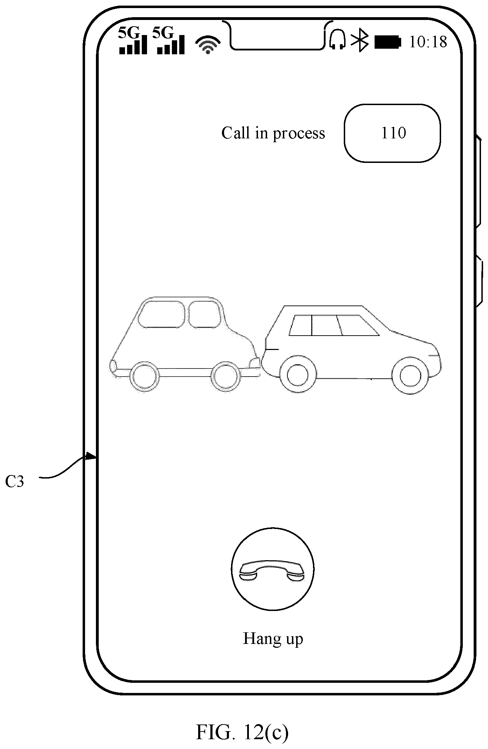

S211: Based on the establishment of the video call connection with the police video call agent, the mobile phone 100 displays a video call interface C3 (refer to FIG. 12(c)), where the video call interface C3 includes a user real-time call image photographed by a camera of the mobile phone 100.

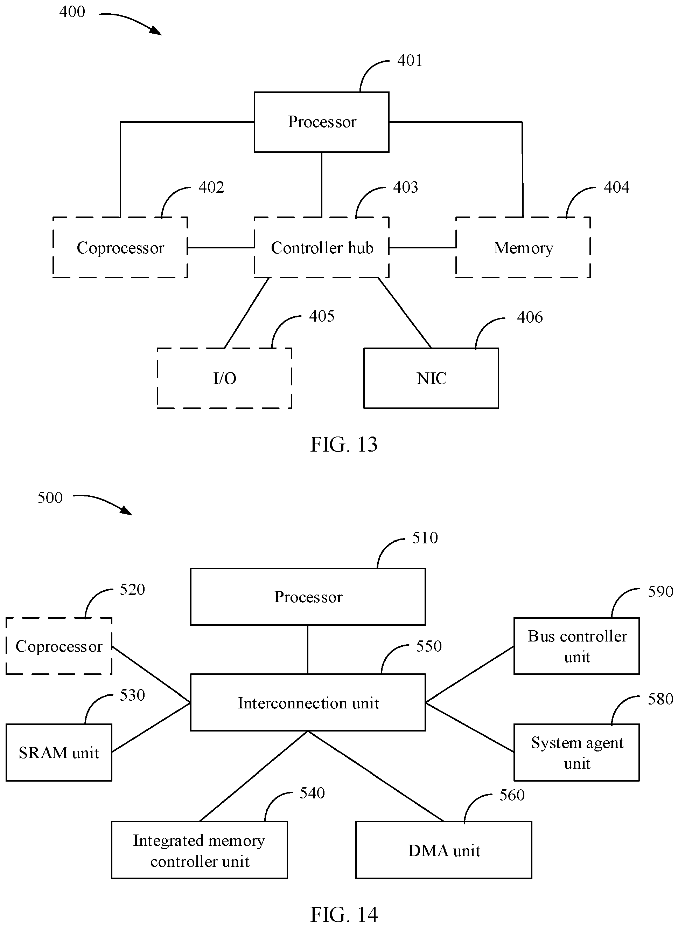

FIG. 13 shows a block diagram of an electronic device 400 according to an embodiment of this application. The electronic device 400 may include one or more processors 401 coupled to a controller hub 403. For at least one embodiment, the controller hub 403 communicates with the processor 401 by using a multi-branch bus such as a front side bus (FSB, Front Side Bus), a point-to-point interface such as a quick path interconnect (QPI, Quick Path Interconnect), or a similar connection 406. The processor 401 executes instructions for controlling a general type of data processing operation. In an embodiment, the controller hub 403 includes, but is not limited to, a graphics memory controller hub (GMCH, Graphics & Memory Controller Hub) (not shown) and an input/output hub (IOH, Input/output Hub) (which may be on a separate chip) (not shown). The GMCH includes a memory and a graphics controller, and is coupled to the IOH.

The electronic device 400 may further include a coprocessor 402 and a memory 404 that are coupled to the controller hub 403. Alternatively, one or both of the memory and the GMCH may be integrated into the processor (as described in this application). The memory 404 and the coprocessor 402 are directly coupled to the processor 401 and the controller hub 403. The controller hub 403 and the IOH are located in a single chip.

The memory 404 may be, for example, a dynamic random access memory (DRAM, Dynamic Random Access Memory), a phase change memory (PCM, Phase Change Memory), or a combination of both. The memory 404 may include one or more tangible and non-transitory computer-readable media that are configured to store data and/or instructions. The computer-readable storage medium stores instructions, and specifically, stores temporary and permanent copies of the instructions. The instructions may include an instruction that enables, when executed by at least one of the processors, the electronic device 400 to implement the method shown in FIG. 7. When the instructions are run on a computer, the computer is enabled to perform the video call making method disclosed in this embodiment of this application.

In an embodiment, the coprocessor 402 is a dedicated processor, for example, a high-throughput MIC (Many Integrated Core, many integrated core) processor, a network or communication processor, a compression engine, a graphics processor, a GPGPU (General-purpose computing on a graphics processing unit, general-purpose computing on a graphics processing unit), or an embedded processor. Optional properties of the coprocessor 402 are shown in FIG. 13 in dashed lines.

In an embodiment, the electronic device 400 may further include a network interface (NIC, Network Interface Controller) 406. The network interface 406 may include a transceiver, configured to provide a radio interface for the electronic device 400, to communicate with any another suitable device (such as a front-end module or an antenna). In various embodiments, the network interface 406 may be integrated with another component of the electronic device 400. The network interface 406 may implement a function of a communication unit in the foregoing embodiment.

The electronic device 400 may further include an input/output (I/O, Input/Output) device 405. The I/O 405 may include: a user interface, designed to enable a user to interact with the electronic device 400; a peripheral component interface, designed to enable a peripheral component to interact with the electronic device 400; and/or a sensor, designed to determine an environmental condition and/or location information related to the electronic device 400.

It should be noted that FIG. 13 is merely an example. To be specific, although FIG. 13 shows that the electronic device 400 includes a plurality of components such as the processor 401, the controller hub 403, and the memory 404, in actual application, a device using the methods in this application may only include some of the components of the electronic device 400, for example, may only include the processor 401 and the network interface 406. In FIG. 13, properties of the optional components are shown in dashed lines.

FIG. 14 shows a block diagram of a SoC (System-on-a-Chip, System-on-a-Chip) 500 according to an embodiment of this application. In FIG. 14, similar parts have a same reference numeral. In addition, a dashed-line box is an optional feature of a more advanced SoC. In FIG. 14, the SoC 500 includes: an interconnection unit 550, coupled to a processor 510; a system agent unit 580; a bus controller unit 590; an integrated memory controller unit 540; one group of or one or more coprocessors 520 that may include integrated graphics logic, an image processor, an audio processor, and a video processor; a static random access memory (SRAM, Static Random Access Memory) unit 530; and a direct memory access (DMA, Direct Memory Access) unit 560. In an embodiment, the coprocessor 520 includes a dedicated processor, for example, a network or communication processor, a compression engine, a GPGPU (General-purpose computing on a graphics processing unit, general-purpose computing on a graphics processing unit), a high-throughput MIC processor, or an embedded processor.

The static random access memory (SRAM) unit 530 may include one or more tangible and non-transitory computer-readable media that are configured to store data and/or instructions. The computer-readable storage medium stores instructions, and specifically, stores temporary and permanent copies of the instructions. The instructions may include an instruction that enables, when executed by at least one of the processors, the SoC to implement the method shown in FIG. 7. When the instructions are run on a computer, the computer is enabled to perform the video call making method disclosed in this embodiment of this application.

The term "and/or" in this specification describes only an association relationship for associated objects and represents that three relationships may exist. For example, A and/or B may represent the following three cases: Only A exists, both A and B exist, and only B exists. The symbol "/" indicates an "or" relationship between the associated objects.

All method implementations of this application may be implemented by software, a magnetic component, firmware, or the like.

Program code may be used to input instructions, to perform functions described in this specification and generate output information. The output information may be applied to one or more output devices in a known manner. For a purpose of this application, a processing system includes any system that has a processor such as a digital signal processor (DSP, Digital Signal Processor), a microcontroller, an application-specific integrated circuit (ASIC), or a microprocessor.

The program code may be implemented in a high-level procedural language or an object-oriented programming language, to communicate with the processing system. The program code may also be implemented by using an assembly language or a machine language when needed. Actually, the mechanism described in this specification is not limited to a scope of any particular programming language. In any case, the language may be a compiled language or an interpretive language.

One or more aspects of at least one embodiment may be implemented by using representative instructions stored on a computer-readable storage medium. The instructions represent various logic in a processor, and when the instructions are read by a machine, the machine acts on the logic for performing the technologies described in this specification. These representations referred to as "IP (Intellectual Property, intellectual property) cores" may be stored in a tangible computer-readable storage medium and provided to a plurality of customers or production facilities for loading into a manufacturing machine that actually manufactures the logic or the processor.

In some cases, an instruction converter may be configured to convert instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by software, hardware, firmware, or a combination thereof. The instruction converter may be located on the processor, outside the processor, or partially on the processor and partially outside the processor.

## Claims

1. A video call making method, applied to a terminal device, wherein the method comprises:
receiving a first operation, and determining a called party on a voice call making interface displayed by the terminal device, wherein the called party can provide a video call service in one or more specific areas;
determining, based on a location of the terminal device, that the location of the terminal device is in the one or more specific areas; and
displaying a video call control on the voice call making interface when the location of the terminal device is in the one or more specific areas, wherein the video call control is configured to trigger video call communication with the called party.

2. The method according to claim 1, wherein the determining, based on a location of the terminal device, that the location of the terminal device is in the one or more specific areas comprises:
sending a query request that carries the location of the terminal device, wherein the query request is used to query a server associated with the called party whether the location is in the specific area; and
receiving a reply in response to the query request, and determining that the location of the terminal device is in the specific area.

3. The method according to claim 2, wherein the server stores an area code of each of the one or more specific areas, and the server determines content of the reply by comparing an area code corresponding to the location of the terminal device with the area code of each of the one or more specific areas.

4. The method according to claim 1, wherein the voice call making interface is a dialing interface used to enter a number, and
the determining a called party on a voice call making interface displayed by the terminal device comprises: entering a number of the called party on the dialing interface.

5. The method according to claim 1, wherein the voice call making interface is an interface used to provide one or more contact entries, and
the determining a called party on a voice call making interface displayed by the terminal device comprises: determining, from the one or more contact entries provided on the voice call making interface, an entry used to indicate the called party.

6. The method according to claim 1, wherein the voice call making interface is enabled in any one of the following manners:
tapping a setting control on a display interface of the terminal device;
pressing a physical button on the terminal device in a predetermined manner;
sending, to the terminal device, a voice instruction used to enable the voice call making interface; and
shaking the terminal device.

7. The method according to claim 1, wherein the first operation is an operation directly performed by the user on the terminal device, or is an operation indirectly performed by the user on the terminal device by operating an electronic device communicatively connected to the terminal device.

8. The method according to claim 1, wherein the called party provides a police calling service, and the video call communication is a police video call service.

9. A terminal device, comprising:
a memory, configured to store instructions executed by one or more processors of the terminal device; and
a processor, wherein when the processor executes the instructions in the memory, the terminal device is enabled to perform the video call making method according to any one of claims 1 to 8.

10. A computer-readable storage medium, wherein the computer-readable storage medium stores instructions, and when the instructions are executed on a computer, the computer is enabled to perform the video call making method according to any one of claims 1 to 8.
